# EUROPÄISCHE PATENTSCHRIFT

(11) **EP 2 698 059 B1**
(45) Veröffentlichungstag und Bekanntmachung des Hinweises auf die Patenterteilung: **21.09.2016**
(21) Anmeldenummer: 13179715.1
(22) Anmeldetag: 08.08.2013
(51) Int. Cl.: A01K 1/02

(54) **Einzelabferkelbucht**
Single farrowing pen
Case de mise-bas individuelle

(30) Priorität: 14.08.2012 AT 8902012
(43) Veröffentlichungstag der Anmeldung: 19.02.2014
(73) Patentinhaber: Schauer Agrotronic GmbH, 4731 Prambachkirchen (AT)
(72) Erfinder: Hagmüller, Werner, 4064 Oftering (AT)
(74) Vertreter: Burger, Hannes

(56) Entgegenhaltungen:
- DE-U1- 9 203 631
- DE-U1- 20 207 558

## Beschreibung

Die Erfindung betrifft eine Einzelabferkelbucht, welche ein Ferkelnest für Ferkel sowie einen Liegebereich und einen Fressbereich für eine Sau aufweist, wobei der Liegebereich und der Fressbereich durch ein senkrecht zu einem Boden der Abferkelbucht verlaufendes Trennelement, insbesondere eine Trennwand oder ein Gitter, getrennt sind, wobei der Fressbereich so schmal ist, dass ein Niederlegen der Sau zum Säugen der Ferkel nicht möglich ist,

Eine Abferkelbucht der eingangs genannten Art ist aus der DE-U-202 07 558 bekannt geworden.

Bei Abferkelbuchten wird zwischen freien Abferkelbuchten und Abferkelbuchten mit Kastenstand unterschieden. Bei den Kastenständen handelt es sich üblicherweise um Metallkäfige zur Fixierung der Sau vor, während und nach der Geburt. In freien Abferkelbuchten gibt es üblicherweise keine Fixiermöglichkeit, die die Sauen beim Abliegen, Aufstehen oder Drehen bei der Geburt behindert.

Nachteilig an bekannten freien Abferkelbuchten ist jedoch, dass mit ihnen ein erhöhtes Risiko einhergeht, dass Ferkel von der Sau erdrückt werden.

Es ist daher eine Aufgabe der vorliegenden Erfindung, die Nachteile bekannter freier Abferkelbuchten zu überwinden.

Diese Aufgabe wird mit einer Abferkelbucht der eingangs genannten Art erfindungsgemäß dadurch gelöst, dass das Trennelement zwei Türen, eine Tür zum Betreten des Fressbereichs und eine Tür zum Verlassen des Fressbereichs, aufweist.

Unter einem Ferkelnest wird in diesem Dokument ein durch eine von der Sau nicht zu überwindende Abtrennung getrennter Aufenthaltsbereich für Ferkel verstanden, wobei die Abtrennung jedoch Durchschlupfe für die Ferkel aufweist oder so angeordnet ist, dass die Ferkel unter der Abtrennung hindurch können.

Die Sau lässt sich durch Verschließen der Absperrung zwischen dem zum Abferkeln und Säugen dienenden Liegebereich und dem Fressbereich während des Fressens zeitweise im Fressbereich fixieren. Durch die räumliche Trennung der einzelnen Bereiche und die Absperrbarkeit des Fressbereiches lässt sich die Sicherheit der Ferkel wesentlich erhöhen. So können sich die Ferkel ungefährdet in das Ferkelnest zurückziehen, während sich die Sau in dem Fressbereich aufhält, sodass die Gefahr eines Erdrückens der Ferkel bei einem Zurückkehren der Sau in den Liegebereich minimiert wird. Auch kann die Sau in dem Fressbereich - ähnlich einem Kastenstand - kurzfristig fixiert werden. Durch die senkrechte Anordnung der Absperrung lässt sich zum einen eine optimale Raumausnutzung und auf einfache Weise die Schaffung eines für die Sau unüberwindlichen Hindernisses gewährleisten.

Eine Fixierung der Sau in dem Fressbereich lässt sich auf einfache Weise dadurch erzielen, dass dasTrennelement zumindest eine verriegelbare Tür aufweist. Durch Betätigen eines Verriegelungsmechanismus lässt sich die Sau dadurch während des Fressens vorübergehend in dem Fressbereich festhalten.

Um ein Eindringen von Ferkeln aus dem Liegebereich in den Fressbereich der Sau zu verhindern kann das Trennelement im Bereich zumindest einer Türöffnung zumindest eine Schwelle aufweisen.

Ein enger Fressbereich und somit eine optimale Platzausnutzung sowie eine gute Fixierung der Sau in dem Fressbereich lassen sich dadurch erzielen, dass die Tür zum Betreten des Fressbereichs in den Fressbereich aufgeht, wobei die Tür zum Verlassen des Fressbereiches in den Liegebereich aufgeht.

Gemäß einer weiteren vorteilhaften Variante der Erfindung kann es vorgesehen sein, dass das Trennelement zwischen Fress- und Liegebereich zumindest eine, vorzugsweise mit einer Klappe verschließbare, Öffnung aufweist, die es irrtümlich in den Fressbereich gelangten Ferkeln ermöglicht, in den Liegebereich zurückzukehren.

Als zusätzliche Maßnahme gegen ein Erdrücken der Ferkel kann in dem Liegebereich zwischen zwei einander gegenüberliegenden, durch das Trennelement begrenzten Seitenwänden zumindest ein gekrümmter, vorzugsweise elliptischer Abweisbügel oder zumindest ein Abweisbrett zum Schutz der Ferkel vor Erdrücken durch die Sau angeordnet sein.

Wie bereits oben erwähnt, sind der Liegebereich und das Ferkelnest vorteilhafterweise durch eine Abtrennung voneinander getrennt. Hierbei kann die Abtrennung zwischen Ferkelnest und Liegebereich eine Seitenwand des Liegebereiches bilden.

Um ein Abfließen von Exkrementen in eine darunter ausgeführte Wanne zu ermöglichen, kann der Boden des Liegebereichs zumindest abschnittsweise perforiert ausgebildet sein bzw. zumindest teilweise durch perforierte Elemente gebildet sein.

Gemäß einer vorteilhaften Variante der Erfindung kann es vorgesehen sein, dass die Tür zum Betreten des Fressbereichs von der Sau nur vom Liegebereich aus zu öffnen ist und die Tür zum Verlassen des Fressbereichs von der Sau nur vom Fressbereich aus geöffnet werden kann.

Die Erfindung samt weiteren Vorteilen wird im Folgenden anhand einiger Ausführungsbeispiele näher erläutert.

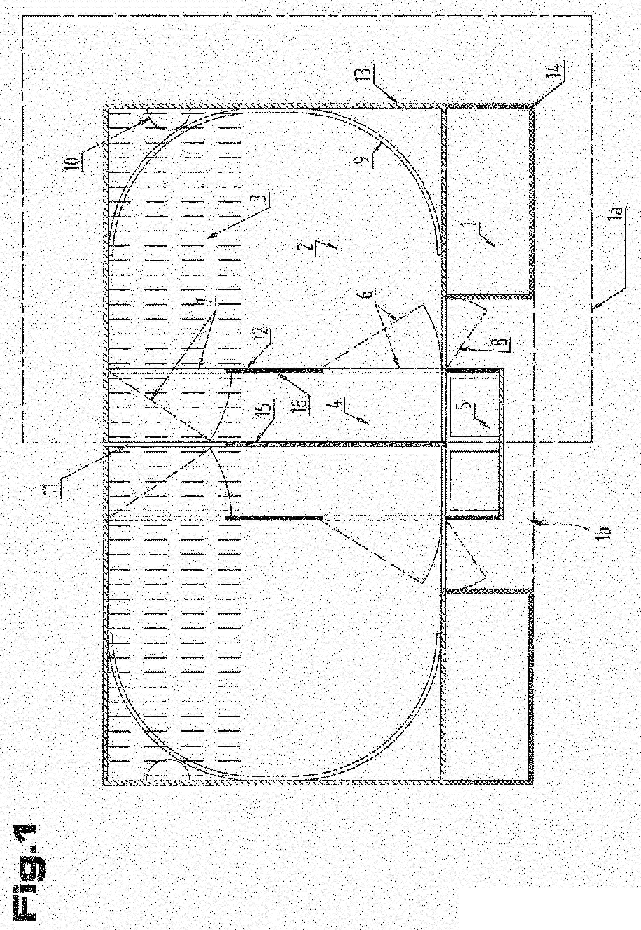

Fig. 1 zeigt in schematisch stark vereinfachter Darstellung einen Grundriss von zwei erfindungsgemäßen Abferkelbuchten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

In Fig. 1 sind zwei miteinander verbundene Abferkelbuchten 1a, 1b dargestellt. Die folgenden Ausführungen beziehen sich jedoch aus Gründen der einfacheren Lesbarkeit auf die Abferkelbucht 1a. Die Ausführungen gelten jedoch sinngemäß auch für die Abferkelbucht 1b.

Gemäß Fig. 1 weist die freie Abferkelbucht 1a ein Ferkelnest 1 für Ferkel sowie einen Liegebereich 2, 3 und einen Fressbereich 4 für eine Sau auf. Das Ferkelnest 1, der Liegebereich 2, 3 und der Fressbereich 4 sind voneinander räumlich getrennt. Der nicht zum Abferkeln oder Säugen von Ferkeln vorgesehene Fressbereich 4 der Sau ist von ihrem Liegebereich 2, 3 durch zumindest ein öffen- und wiederverschließbares Trennelement 16 getrennt. Bevorzugter Weise ist der Fressbereich so schmal, dass ein Hinlegen der Sau zum Säugen der Ferkel nicht möglich ist.

Das Ferkelnest 1 ist von dem Liegebereich 2 durch eine Trennwand getrennt, die unten einen Spalt von einer so geringen Höhe belassen kann, dass die Ferkel noch in ihr Ferkelnest 1 gelangen können, jedoch der Muttersau in dieses Abteil der Zugang verwehrt ist. Die Ferkel kommen in den Liegebereich nur zum Saugen und kehren, dann in ihr Ferkelnest 1 zurück, wo sie vor der Gefahr sicher sind, von der schweren Muttersau erdrückt zu werden.

Der Liegebereich 2, 3 kann von Seitenwänden 13 umgeben sein, welche als geschlossene Wände ausgebildet sein können. Auch der Fressbereich 4 kann an seinen Schmalseiten von dieser Seitenwand 13 begrenzt sein. Die an die Trennwand zum Liegebereich anschließenden Wände 14 des Ferkelnestes 1 können niedriger als die Trennwand bzw. die Seitenwände 13 der Abferkelbucht 1a ausgebildet sein. So können die Trennwand bzw. die Seitenwände 13 beispielsweise eine Höhe von 110 cm aufweisen, während die Wände 14 beispielsweise eine Höhe von 50 cm aufweisen können.

An dieser Stelle sei darauf hingewiesen, dass alle Seitenwände der Abferkelbox als geschlossene Wände ausgeführt sein können. In dem Bereich, in welchem die beiden Abferkelbuchten 1a, 1b aneinander grenzen, ist jedoch eine Trennwand 15 vorgesehen, welche bevorzugter Weise aus Gitterstäben und/oder einem durchsichtigen Material gebildet sein kann. Die beiden Abferkelbuchten 1a, 1b können auch als ein einziges Modul gefertigt sein.

Der Boden der Abferkelbucht 1a kann sich in zwei Bereiche unterteilen, wobei ein erster Bereich als durchgehend geschlossener Untergrund ausgeführt und ein zweiter Bereich Schlitze aufweisen kann. In Fig. 1 ist der Bereich des Liegebereiches, welcher einen perforierten Boden aufweist, mit dem Bezugszeichen 2 versehen. Der Bereich des Liegebereichs, der hingegen einen geschlossenen Boden aufweist, ist mit dem Bezugszeichen 3 gekennzeichnet. Der zweite Bereich kann beispielsweise mittels perforierter Elemente gebildet werden, um ein Abließen von Exkrementen zu ermöglichen. In der dargestellten Ausführungsform befindet sich in dem Abschnitt mit dem perforierten Boden eine Tränke 10.

Das Trennelement 16, welches als senkrecht angeordnete Wand oder Gitter, beispielsweise mit einer Höhe von 80 cm, ausgebildet sein kann, weist zwei Türen 6, 7 auf. Die Tür 7 dient als Zugang für den Fressbereich 4 und die Tür 6 zum Verlassen des Fressbereichs 4. Die Tür 7 zum Betreten des Fressbereichs 4 geht in den Fressbereich 4 auf, wobei die Tür 6 zum Verlassen des Fressbereiches 4 in den Liegebereich 2, 3 aufgeht. Die Tür 7 zum Betreten des Fressbereichs kann von der Sau nur vom Liegebereich aus geöffnet werden und die Tür 6 zum Verlassen des Fressbereichs kann von der Sau nur vom Fressbereich aus geöffnet werden.

An einer Stirnseite des Fressbereichs 4 ist ein Futtertrog 5 angeordnet.

Weiters kann es vorgesehen sein, dass zumindest die Tür 6 verriegelbar ist, sodass die Sau in dem Fressbereich 4 festgehalten werden kann. Jedoch kann es auch vorgesehen sein, dass die Tür 7 ebenso verriegelbar ist. Gegenüber der Tür 7 kann eine Gitterwand 11 vorgesehen sein.

Das Trennelement 16 kann zumindest im Bereich der Öffnungen der Türen 6 und 7 untern Schwellen aufweisen, die ein Eindringen von Ferkeln in den Fressbereich 4 verhindern. Die Schwellen können beispielsweise eine Höhe von 30 cm aufweisen.

Um Ferkeln, die trotz allem in den Fressbereich 4 gelangt sind, ein Rückkehr in den Liegebereich 2, 3 zu ermöglichen, kann eine entsprechende Öffnung 12 in der Absperrung 16 vorgesehen sein. Im Bereich der Öffnung 12 ist keine Schwelle vorgesehen. Die Öffnung 12 kann vorteilhafterweise mit einer vom Fressbereich 4 aus betrachtet nach außen in Richtung des Liegebereichs 2, 3 aufschwenkenden Klappe versehen sein, die am oberen Rand der Öffnung 12 befestigt sein kann.

Als zusätzliche Sicherheitsmaßnahme kann in dem Liegebereich 2, 3 zwischen zwei einander gegenüberliegenden, die Absperrung begrenzenden Seitenwänden zumindest ein gekrümmter, vorzugsweise elliptischer Abweisbügel 9 zum Schutz der Ferkel vor Erdrücken durch die Sau angeordnet sein. Der Abweisbügel 9 ist hierbei von dem Boden der Abferkelbucht 1a erhöht angeordnet, sodass die Ferkel sich darunter hinweg bewegen können. Anstelle des Abweisbügels 9 kann auch ein Abweisbrett vorgesehen sein.

Durch eine Zugangstür 8 kann eine Person die Abferkelbucht betreten.

Abschließend sei noch darauf hingewiesen, dass die Ausführungsbeispiele sich auf mögliche Ausführungsvarianten der erfindungsgemäßen Abferkelbucht beziehen, wobei an dieser Stelle bemerkt sei, dass die Erfindung nicht auf das speziell dargestellte Ausführungsbeispiel derselben eingeschränkt ist, sondern vielmehr auch alle anderen nicht dargestellten und beschriebenen Ausführungsvarianten, welche unter den Wortlaut des unabhängigen Anspruchs fallen vom Schutzbereich mit umfasst sind.

### Bezugszeichenaufstellung

- 1a: Abferkelbucht
- 1b: Abferkelbucht
- 1: Ferkelnest
- 2: Liegebereich fest
- 3: Liegebereich perforiert
- 4: Fressbereich
- 5: Futtertrog

- 6: Tür
- 7: Tür
- 8: Zugangstür
- 9: Abweisbügel
- 10: Tränke

- 11: Gitterwand
- 12: Öffnung
- 13: Seitenwand
- 14: Wand
- 15: Trennwand

- 16: Trennelement

## Patentansprüche

1. Einzelabferkelbucht (1a, 1b), welche ein Ferkelnest (1) für Ferkel sowie einen Liegebereich (2, 3) und einen Fressbereich (4) für eine Sau aufweist, wobei der Liegebereich (2, 3) und der Fressbereich (4) durch ein senkrecht zu einem Boden der Abferkelbucht verlaufendes Trennelement, insbesondere eine Trennwand oder ein Gitter, getrennt sind, wobei der Fressbereich so schmal ist, dass ein Niederlegen der Sau zum Säugen der Ferkel nicht möglich ist, **dadurch gekennzeichnet, dass** das Trennelement zwei Türen, eine Tür (7) zum Betreten des Fressbereichs und eine Tür (6) zum Verlassen des Fressbereichs, aufweist.

2. Einzelabferkelbucht nach Anspruch 1, **dadurch gekennzeichnet, dass** zumindest eine Tür (6, 7) verriegelbar ist.

3. Einzelabferkelbucht nach Anspruch 1 oder 2, **dadurch gekennzeichnet, dass** zumindest in Bereichen von Öffnungen der Türen (6, 7) Schwellen angeordnet sind, um ein Eindringen von Ferkeln in den Fressbereich (4) zu verhindern.

4. Einzelabferkelbucht nach einem der Ansprüche 1 bis 3, **dadurch gekennzeichnet, dass** das Trennelement (16) zumindest eine, vorzugsweise mit einer Klappe verschließbare, Öffnung (12) aufweist, die es irrtümlich in den Fressbereich (4) gelangten Ferkeln ermöglicht, in den Liegebereich (2, 3) zurückzukehren.

5. Einzelabferkelbucht nach einem der Ansprüche 1 bis 4, **dadurch gekennzeichnet, dass** in dem Liegebereich (2, 3) zwischen zwei einander gegenüberliegenden, durch das Trennelement begrenzten Seitenwänden zumindest ein gekrümmter, vorzugsweise elliptischer Abweisbügel (9) oder zumindest ein Abweisbrett zum Schutz der Ferkel vor Erdrücken durch die Sau angeordnet ist.

6. Einzelabferkelbucht nach einem der Ansprüche 1 bis 5 , **dadurch gekennzeichnet, dass** das Ferkelnest und Liegebereich durch eine Seitenwand (13) des Liegebereiches (2, 3) getrennt sind.

7. Einzelabferkelbucht nach einem der Ansprüche 1 bis 6, **dadurch gekennzeichnet, dass** ein Boden des Liegebereichs (2, 3) zumindest abschnittsweise perforiert ausgebildet ist.

8. Einzelabferkelbucht nach einem der Ansprüche 1 bis 6, **dadurch gekennzeichnet, dass** die Tür (7) zum Betreten des Fressbereichs (4) in den Fressbereich (4) aufgeht, wobei die Tür (6) zum Verlassen des Fressbereiches (4) in den Liegebereich (2, 3) aufgeht.

9. Einzelabferkelbucht nach einem der Ansprüche 1 bis 8, **dadurch gekennzeichnet, dass** die Tür zum Betreten des Fressbereichs von der Sau nur vom Liegebereich aus zu öffnen ist und die Tür zum Verlassen des Fressbereichs von der Sau nur vom Fressbereich aus geöffnet werden kann.

## Claims

1. A single farrowing pen (1a, 1b), which has a piglet nest (1) for piglets and a resting area (2, 3) and a feeding area (4) for a sow, wherein the resting area (2, 3) and the feeding area (4) are separated by a separating element extending vertically to a floor of the farrowing pen, in particular by a separating wall or a grate, wherein the feeding area (4) is so narrow that it is not possible for the sow to lie down to suckle the piglets, **characterized in that** the separating element comprises two doors, one door (7) for entering the feeding area and one door (6) for exiting the feeding area.

2. The single farrowing pen according to claim 1, **characterized in that** at least one door (6, 7) is lockable.

3. The single farrowing pen according to claim 1 or 2, **characterized in that** thresholds are arranged at least in areas of openings of the doors (6, 7), in order to prevent piglets from intruding into the feeding area (4).

4. The single farrowing pen according to any one of claims 1 to 3, **characterized in that** the separating element (16) comprises at least one opening (12), preferably lockable with a flap, which enables piglets that have entered the feeding area (4) by mistake to return to the resting area (2, 3).

5. The single farrowing pen according to any one of claims 1 to 4, **characterized in that** in the resting area (2, 3) between two side walls facing one another and bounded by the separating element, at least one curved, preferably elliptical safety bar (9), or at least one safety board, is arranged to protect the piglets from being crushed by the sow.

6. The single farrowing pen according to any one of claims 1 to 5, **characterized in that** the piglet nest and resting area are separated by a side wall (13) of the resting area (2, 3).

7. The single farrowing pen according to any one of claims 1 to 6, **characterized in that** a floor of the resting area (2, 3) is perforated at least in some sections.

8. The single farrowing pen according to any one of claims 1 to 6, **characterized in that** the door (7) for entering the feeding area (4) opens into the feeding area (4), wherein the door (6) for exiting the feeding area (4) opens into the resting area (2, 3).

9. The single farrowing pen according to any one of claims 1 to 8, **characterized in that** the door for entering the feeding area can be opened by the sow only from the resting area and the door for exiting the feeding area can be opened by the sow only from the feeding area.

## Revendications

1. Case de mise-bas individuelle (1a, 1b), qui comprend un nid de porcelets (1) pour des porcelets, ainsi qu'une zone de repos (2, 3) et une zone d'alimentation (4) pour une truie, dans laquelle la zone de repos (2, 3) et la zone d'alimentation (4) sont séparées par un élément de séparation s'étendant perpendiculairement à un plancher de la case de mise-bas, notamment une cloison ou une grille, dans laquelle ladite zone d'alimentation est si étroite qu'il est impossible à la truie de se coucher pour allaiter les porcelets, **caractérisée en ce que** l'élément de séparation présente deux portes, une porte (7) pour entrer dans la zone d'alimentation, et une porte (6) pour sortir de la zone d'alimentation.

2. Case de mise-bas individuelle selon la revendication 1, **caractérisée en ce qu'**au moins une porte (6, 7) peut être verrouillée.

3. Case de mise-bas individuelle selon la revendication 1 ou 2, **caractérisée en ce que** des seuils peuvent être agencés au moins dans les zones d'ouverture des portes (6, 7), pour empêcher la pénétration de porcelets dans la zone d'alimentation (4).

4. Case de mise-bas individuelle selon l'une quelconque des revendications 1 à 3, **caractérisée en ce que** l'élément de séparation (16) présente au moins une ouverture (12), de préférence pouvant être fermée par un clapet, qui permet à des porcelets parvenus par erreur dans la zone d'alimentation (4) de retourner en arrière dans la zone de repos (2, 3).

5. Case de mise-bas individuelle selon l'une quelconque des revendications 1 à 4, **caractérisée en ce que** dans la zone de repos (2, 3), entre deux parois latérales opposées l'une à l'autre délimitées par l'élément de séparation, est agencé au moins un arceau de rejet incurvé (9), de préférence elliptique, ou au moins une planche de rejet pour protéger les porcelets contre un écrasement par la truie.

6. Case de mise-bas individuelle selon l'une quelconque des revendications 1 à 5, **caractérisée en ce que** le nid de porcelets et la zone de repos sont séparés par une paroi latérale (13) de la zone de repos (2, 3).

7. Case de mise-bas individuelle selon l'une quelconque des revendications 1 à 6, **caractérisée en ce qu'**un plancher de la zone de repos (2, 3) est réalisé perforé au moins par endroits.

8. Case de mise-bas individuelle selon l'une quelconque des revendications 1 à 6, **caractérisée en ce que** la porte (7) pour entrer dans la zone d'alimentation (4) s'ouvre dans la zone d'alimentation (4), dans laquelle la porte (6) pour quitter la zone d'alimentation (4) s'ouvre dans la zone de repos (2, 3).

9. Case de mise-bas individuelle selon l'une quelconque des revendications 1 à 8, **caractérisée en ce que** la porte pour entrer dans la zone d'alimentation est ouverte par la truie uniquement depuis la zone du repos, et la porte pour quitter la zone d'alimentation ne peut être ouverte par la truie que depuis la zone d'alimentation.
